# EUROPEAN PATENT SPECIFICATION

(11) **EP 3 666 614 B1**
(45) Date of publication and mention of the grant of the patent: **29.11.2023**
(21) Application number: 18212456.0
(22) Date of filing: 13.12.2018
(51) Int. Cl.: B60W 40/10, B60W 30/165, G05D 1/02, G08G 1/00

(54) **METHOD FOR DETERMINING A BENEFICIAL EFFECT OF A PLATOON OF VEHICLES**
VERFAHREN ZUM BESTIMMEN EINER POSITIVEN WIRKUNG EINER FAHRZEUGKOLONNE
PROCÉDÉ POUR DÉTERMINER UN EFFET BÉNÉFIQUE D'UN PELOTON DE VÉHICULES

(43) Date of publication of application: 17.06.2020
(73) Proprietor: Continental Automotive Technologies GmbH, 30165 Hannover (DE)
(72) Inventor: MARJANOVIC, Aleksandar, 11070 Belgrade (RS)
(74) Representative: Continental Corporation

(56) References cited:
- WO-A1-2014/133425
- DE-A1-102017 112 279
- US-A1- 2013 080 018

## Description

The invention relates to a method for determining a beneficial effect of a platoon of vehicles.

Methods for operating vehicles such as, for example, commercial vehicles in a platoon in such a way that the vehicles form said platoon are well-known form the prior art. A first one of the platoon's vehicles is a leading vehicle. A second one of the platoon's vehicles is a following vehicle which follows the leading vehicle. In the platoon, at least the following vehicle is operated, in particular automatically, in such a way that a distance between the leading vehicle and the following vehicle is kept particularly low. Therein, for example, the following vehicle directly follows the leading vehicle so that there is no other vehicle driving between the leading vehicle and the following vehicle.

Moreover, for example, the following vehicle is operated automatically by means of an electronic control unit such that the distance between the following vehicle and the leading vehicle is kept particularly low. By forming the platoon or by operating the vehicles such that the vehicles form said platoon, drag at least for the following vehicle can be kept particularly low so that the vehicles can be operated in a particularly efficient way. This means the platoon has a beneficial effect on at least the following vehicle. Moreover, the platoon can have a beneficial effect on the leading vehicle since the leading vehicle can be operated particularly efficiently, too. In other words, the beneficial effect of the platoon comprises that at least the following vehicle can be operated particularly efficiently since drag for the following vehicle can be kept particularly low.

Document US 2013/0080018 A1 discloses a method for providing aerodynamic information to improve a mileage and driving stability of a vehicle. The method comprises measuring pressure which a vehicle body receives while a vehicle is driven by a plurality of pressure sensors installed in the vehicle body. The method further comprises calculating, by a controller, an optimal intervehicle distance at which an air resistance value is minimized based on an intervehicle distance from a preceding vehicle.

Document WO 2014/133425 A1 discloses a method for determining an aerodynamically favorable position between ground traveling vehicles. A first leading vehicle and a following vehicle are shown in a platoon driving configuration. The following vehicle is equipped with a signal emitting measuring unit. The measuring unit is capable of measuring variations in airflow characteristics and air pressure as a function of the distance to the rear surface of the leading vehicle.

Thus, it is an object of the present invention to provide a method by means of which a beneficial effect of a platoon can be determined in a particularly advantageous way.

This object is solved by a method having the features of patent claim 1. Advantageous embodiments with expedient developments of the invention are indicated in the other patent claims.

The invention relates to a method for determining a beneficial effect of a platoon comprising a leading vehicle and at least one following vehicle following the leading vehicle. For example, the leading vehicle and/or the following vehicle can be a commercial vehicle such as a truck. Preferably, the method is performed during a tour of the vehicles, i.e. while the vehicles are driving. In the platoon, the following vehicle is driving behind the leading vehicle wherein, preferably, no other vehicle is driving between the leading vehicle and the following vehicle. Thus, for example, the following vehicle is following the leading vehicle directly. For example, at least the following vehicle is operated automatically by means of an electronic control unit such that the following vehicle follows the leading vehicle and that a distance between the following vehicle and the leading vehicle is kept particularly low. For example, the electronic control unit is a component of the following vehicle.

In a first step of the method according to the present invention at least one first pressure acting on the leading vehicle is determined by means of an electronic processing unit. In a second step of the method according to the present invention at least one second pressure acting on the following vehicle is determined by means of the electronic processing unit. In a third step of the method a difference between the first and second pressures is determined by means of the electronic processing unit. Moreover, in a fourth step of the method, at least one benefit value is determined on the basis of the difference by means of the electronic processing unit, wherein the benefit value characterizes the beneficial effect of the platoon on at least one of the vehicles, in particular on the following vehicle and/or the leading vehicle.

For example, the difference between the pressures can be zero so that the platoon has no beneficial effect on the vehicles. However, usually, the platoon has such a beneficial effect on the following vehicle and/or the leading vehicle that the respective vehicle can be operated more efficiently in comparison to a trip during which the respective vehicle is not part of a platoon and is driving alone. This means the beneficial effect of the platoon is that the respective vehicle can be driven in such a way that an energy consumption, in particular a fuel consumption, of the respective vehicle can be kept particularly low. Hence, if the difference is greater than zero, the platoon has a beneficial effect on at least one of the vehicles in comparison to said tour. The greater the difference is, the greater the beneficial effect of the platoon is and, for example, the greater the beneficial value is. Thus, by means of the method according to the present invention, the beneficial effect of the platoon can be determined in a particularly advantageous way. In particular, the beneficial effect of the platoon can be quantified by means of the method according to the present invention in a particular precise and advantageous way.

The idea behind the invention is that, whilst platooning, i.e. forming a platoon of several vehicles is well-known, there are no methods to determine possible beneficial effects of platooning. Usually, it is impossible to extract platooning effect savings from existing in-vehicle measurements. Very dynamic platooning with frequently gap and speed changes due to traffic conditions and legal restrictions which strongly effect the aerodynamic drag of the following vehicle has significant impact on a possible beneficial effect which cannot be measured with time or kilometers of platooning. On the other hand, total fuel consumption is too complex, depending on a lot of different influences to be possible to extract just platooning percentage. With usually available data it is not possible to determine accurately, reliably and fair benefit sharing.

In the light of this, it was found that a beneficial effect of a platoon can be determined, in particular quantified, by comparing said pressures acting on the vehicles. Since the leading vehicle is not following any vehicle of the platoon and since the following vehicle is following the leading vehicle, the second pressure acting on the following vehicle should be lower than the first pressure acting on the first vehicle. It was found that a possible beneficial effect of a platoon is reflected in the difference of said pressures, wherein the pressures and, thus, the difference can be determined particularly precisely. Thus, the beneficial effect of the platoon can be determined particularly precisely.

In a particularly advantageous embodiment of the invention the electronic processing unit receives at least one first pressure signal provided by the leading vehicle. For example, the first pressure signal is provided by a first electronic control unit and/or a first pressure sensor of the leading vehicle. The first pressure signal is indicative of the first pressure which is, preferably, measured by means of the at least one first pressure sensor of the leading vehicle. Therein, the electronic processing unit determines the first pressure on the basis of the first pressure signal. Thus, the first pressure and, thus, the benefit value can be determined particularly precisely.

In a further particularly advantageous embodiment of the invention the electronic processing unit receives at least one second pressure signal provided by the following vehicle, the second pressure signal being indicative of the second pressure which is, preferably, measured by a second pressure sensor of the following vehicle. For example, the second pressure signal is provided by a second electronic control unit and/or by the second pressure sensor of the following vehicle. Moreover, the electronic processing unit determines the second pressure on the basis of the second pressure signal so that the second pressure and, thus, the benefit value can be determined particularly precisely.

For example, the electronic processing unit can be a component which is different from both the leading vehicle and the following vehicle so that, for example, the electronic processing unit is a component which is an additional and external component with respect to the leading and following vehicles. For example, the electronic processing unit is formed by a server, in particular by a stationary server, which is not a component of the vehicles. Alternatively, the electronic processing unit can be a component of the leading vehicle or the following vehicle so that, for example, the electronic processing unit is the first electronic control unit or the second electronic control unit.

For example, the second pressure sensor of the following vehicle measures the second pressure and provides the second pressure signal indicative of the measured second pressure, wherein the electronic processing unit, in particular the second electronic control unit or the first electronic control unit, receives the second pressure signal and determines the second pressure on the basis of the second pressure signal. Alternatively or additionally, the first pressure sensor of the leading vehicle measures the first pressure and provides the first pressure signal indicative of the measured first pressure. The electronic processing unit, in particular the first electronic control unit or the second electronic control unit, receives the first pressure signal and determines the first pressure on the basis of the first pressure signal.

In order to determine the beneficial effect in a particularly easy way, in an embodiment of the invention, the first and second pressures are respective total pressures so that, for example, the respective pressure sensor is a total pressure sensor by means of which the respective pressure is measured as a total pressure.

Alternatively, the electronic processing unit receives at least one first pressure signal provided by the leading vehicle, the first pressure signal being indicative of the first pressure being a first dynamic pressure. Moreover, the electronic processing unit determines the first pressure on the basis of the first pressure signal. For example, the first pressure signal is provided by the first electronic control unit. It was found that the beneficial effect of the platoon can be determined particularly precisely on the basis of the dynamic pressure.

In a further advantageous embodiment of the invention, the electronic processing unit receives at least one second pressure signal provided by the following vehicle, the second pressure signal being indicative of the second pressure being a second dynamic pressure. Moreover, the electronic processing unit determines the second pressure on the basis of the second pressure signal. For example, the second pressure signal is provided by the second electronic control unit. Thereby, the benefit value and, thus, the beneficial effect of the platoon can be determined particularly precisely.

In order to determine the second dynamic pressure particularly precisely, in an embodiment of the invention, at least one total pressure acting on the following vehicle is measured by means of at least one total pressure sensor of the following vehicle. For example, the total pressure sensor is said second pressure sensor of the following vehicle. Furthermore, at least one static pressure acting on the following vehicle is measured by means of at least one static pressure sensor of the following vehicle. Preferably, the static pressure sensor is an additional sensor with respect to the total pressure sensor so that the total pressure sensor and the static pressure sensor are respective components which are, for example arranged at different locations of the following vehicle. Moreover, preferably the second pressure is determined, by means of the electronic processing unit on the basis of a difference between the measured total pressure and the measured static pressure. For example, the total pressure sensor provides a third signal being indicative of the measured total pressure and the static pressure sensor provides a fourth signal being indicative of the measured static pressure. The electronic processing unit, in particular the second electronic control unit, receives the third and fourth signals and determines, on the basis of the third and fourth signals, the second dynamic pressure.

Furthermore, in a further embodiment of the invention, at least one second total pressure acting on the leading vehicle is measured by means of at least one second total pressure sensor of the leading vehicle. For example, the second total pressure sensor is said first pressure sensor of the leading vehicle. Moreover, at least one second static pressure acting on the leading vehicle is measured by means of at least one second static pressure sensor of the leading vehicle. For example, the first pressure being the first dynamic pressure is determined, in particular by means of the electronic processing unit, on the basis of a difference between the measured second total pressure and the measured second static pressure. Thus, the beneficial effect can be determined particularly precisely.

In a further advantageous embodiment of the invention the electronic processing unit is a component of the following vehicle or of the leading vehicle so that, for example, the leading vehicle or its operator or driver can be rewarded by offering the beneficial effect of the platoon to the following vehicle or its driver or its provider.

Preferably, the first pressure signal is received by the following vehicle from the leading vehicle via a direct vehicle-to-vehicle-communication between the leading vehicle and the following vehicle. Alternatively or additionally, the second pressure signal is received by the leading vehicle from the following vehicle via said direct vehicle-to-vehicle-communication. Thus, data on the basis of which the beneficial effect, i.e. the benefit value can be determined particularly precisely can be shared between the vehicles so that, for example, at least one of the vehicles or, preferably, both vehicles can determine the beneficial effect of the platoon precisely.

In a further advantageous embodiment of the invention the benefit value is determined by integrating the difference on a time basis so that, for example, the leading vehicle can be rewarded for offering the beneficial effect to the following vehicle and/or the following vehicle can be rewarded for offering the beneficial effect to the leading vehicle. Thus, the beneficial effect can be shared in a fair way.

Moreover, preferably, the benefit value is transferred from the electronic processing unit to a further processing unit such as said server for determining, on the basis of the benefit value, a reward for the beneficial effect of the platoon. Thus, the leading vehicle and/or the following vehicle or its driver or operator can be rewarded for offering the beneficial effect.

As can be gathered from the description above, the invention can enable advantageous measurement of the beneficial effect of the platoon, in particular with the final target to define fair and attractive sharing of the beneficial effect between participants of the platoon. A basic or initial assumption may be that any isolated vehicle without any influence of other vehicles can be exposed to the same total pressure of the same conditions and same altitude and same speed. The static pressure is a state of or depends on the atmosphere in the vehicle's environment common for all participants or vehicles of the platoon. In the platoon, the following vehicle is exposed to a slightly lower total pressure than the leading vehicle because of influences of the leading vehicle on the total pressure to which the following vehicle is exposed. The total pressure acting on the following vehicle depends on a distance or a gap between the following vehicle and the leading vehicle and on a speed of the vehicles, so that the difference between said pressures directly represents the beneficial effect of the platoon.

A second following vehicle following the first following vehicle is influenced in the same way by the first following vehicle and the leading vehicle. Moreover, the difference between the total pressure and the static pressure is a dynamic pressure. A difference between instantaneous values of dynamic pressures of the leading vehicle and the following vehicle represents a quantity of the beneficial effect of the platoon. The final value in form of the benefit value is preferably obtained by integration of the quantity over time spent in the platoon. For example, the benefit value can be processed by a cloud service provider to obtain monetized parameter for invoice generation for paying a fair fee for a service to the leading vehicle or its operator or driver from every specific following participant of the platoon. Preferably, the electronic processing unit considers all vehicles of the platoon as a unique system. Preferably, the vehicles of the platoon are remotely and/or wirelessly connected by a vehicle-to-vehicle-communication-system to share respective data which are, preferably, indicative of respective pressures acting on the respective vehicles. For example, the respective pressures can comprise respective total pressures and/or respective static pressures and/or respective dynamic pressures.

Preferably, the leading vehicle receives the second pressure signal so that the leading vehicle, in particular the first electronic control unit, can determine the difference, and, thus, the benefit value on the basis of the first and second pressure signals. Moreover, preferably, the following vehicle, in particular the second electronic control unit, receives the first signal so that the following vehicle can determine the benefit value on the basis of the first and second signals. Preferably, both the leading vehicle and the following vehicle determine the difference, and, thus, the benefit value, in particular by sharing the signals. This means, for example, the leading vehicle provides the first signal and the following vehicle provides the second signal so that the first electronic control unit receives the first and second signals and the second electronic control unit receives the first and second signals. Thus, every vehicle offering or enabling a beneficial effect of the platoon can be rewarded in a fair and efficient way.

Further advantages, features and details of the invention derive from the following description of preferred embodiments as well as from the drawings. The features and feature combinations previously mentioned in the description as well as the features and feature combination mentioned in the following description of the figures and/or shown in the figures alone can be employed not only in the respective indicated combination but also in any other combination or taken alone without leaving the scope of the invention.

The drawings show in:
- Fig. 1: a schematic side view of a platoon;
- Fig. 2: a schematic side view of a further platoon; and
- Fig. 3: part of a schematic side view of a vehicle of the respective platoon.

In the figures the same elements or elements having the same functions are indicated by the same reference signs.

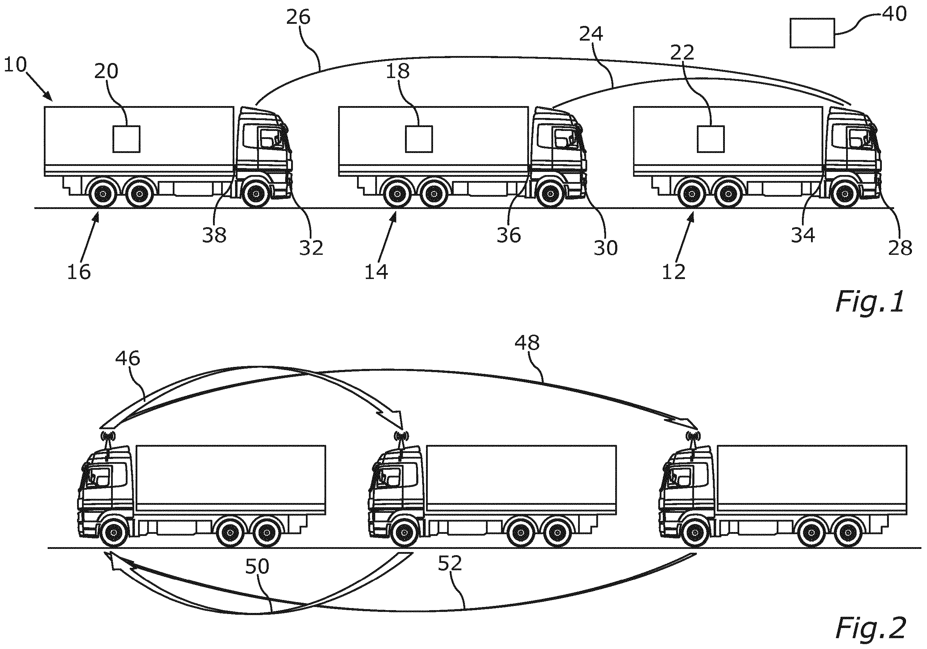

Fig. 1 shows in a schematic side view a platoon 10 comprising at least or exactly three vehicles 12, 14 and 16. In the platoon 10, the vehicle 12 is a leading vehicle so that, for example, no other vehicle of the platoon 10 is driving in front of the leading vehicle (vehicle 12). Moreover, the vehicle 14 is a first following vehicle which is following the leading vehicle directly so that no other vehicle of the platoon 10 is driving between the vehicles 12 and 14. Furthermore, the vehicle 16 is a second following vehicle following the first following vehicle directly so that the first following vehicle is driving between the leading vehicle and the second following vehicle. As can be seen from Fig. 1, the respective vehicles 12, 14 and 16 are configured as commercial vehicles such as trucks. In the following, a method for determining a beneficial effect of the platoon 10 is described. The method is performed during a tour of the vehicles 12, 14 and 16, i.e. while the vehicles 12, 14 and 16 are driving in and forming the platoon 10. For example, the vehicles 14 and 16 are operated, in particular driven, automatically by respective electronic control units 18 and 20 of the vehicles 14 and 16 in such a way, that the vehicle 14 is following the vehicle 12 and the vehicle 16 is following the vehicle 14. Preferably, the vehicles 14 and 16 are operated in such a way that a gap or distance between the vehicles 12 and 14 and a gap or distance between the vehicles 14 and 16 are kept particularly low. Furthermore, preferably, the vehicle 12 comprises an electronic control unit 22. For example, the electronic control unit 22 is also referred to as a first electronic control unit, wherein the electronic control unit 18 is also referred to as second electronic control unit. Moreover, preferably, the electronic control unit 20 is also referred to as third electronic control unit. Alternatively or additionally, the leading vehicle is operated automatically by means of the electronic control unit 22, in particular in such a way that the gap or distance between the vehicles 12 and 14 can be kept particularly low.

As can be seen from Fig. 1, the leading vehicle, in particular the electronic control unit 22, is remotely and/or wirelessly connected with the vehicle 14, in particular with the electronic control unit 18, via a first direct vehicle-to-vehicle-communication 24 via which the vehicles 12 and 14 can communicate, i.e. share data and/or signals. Moreover, the vehicle 12, in particular the electronic control unit 22, is connected to the vehicle 16, in particular the electronic control unit 20, via a second direct vehicle-to-vehicle-communication 26 via which the vehicles 12 and 16, in particular the electronic control units 22 and 20, can share data and/or signals. For example, the leading vehicle communicates, via the communications 24 and 26, with all following vehicles of the platoon 10, wherein, preferably, the respective following vehicle only communicates with the leading vehicle.

For example, in the embodiment shown in Fig. 1, the respective electronic control unit 18, 20 and 22 is an electronic processing unit, wherein the respective electronic processing unit is a component of the respective vehicle 12, 14 and 16. Moreover, in the embodiment shown in Fig. 1, the electronic control unit 18 receives, via the communication 24, a first pressure signal provided by the vehicle 12, in particular by the electronic control unit 22. The first pressure signal is indicative of a first pressure acting on the vehicle 12 while driving in the platoon 10. The vehicle 12, in particular the electronic control unit 22, receives, via the communication 24, a second pressure signal being indicative of a second pressure acting on the vehicle 14 while driving in the platoon 10. Moreover, for example, the vehicle 16, in particular the electronic control unit 20, receives, via the communication 26, a third pressure signal being indicative of the first pressure. Moreover, for example, the vehicle 12, in particular the electronic control unit 22, receives a fourth pressure signal via the communication 26, the fourth pressure signal being indicative of a third pressure acting on the vehicle 16 while driving in the platoon 10. The first signal is provided by the vehicle 12, in particular by the electronic control unit 22. The second signal is provided by the vehicle 14, in particular by the electronic control unit 18. The third signal is provided by the vehicle 12, in particular by the electronic control unit 22, and the fourth signal is provided by the vehicle 16, in particular by the electronic control unit 20.

Preferably, the first pressure, the second pressure and/or the third pressure can be a total pressure measured by a respective total pressure sensor 28, 30 and 32 of the respective vehicle 12, 14 and 16. For example, the respective total pressure sensor 28, 30 and 32 provides a respective first sensor signal which is received by the respective electronic control unit 22, 18 and 20. Thus, for example, the respective pressure signal is indicative of the respective measured total pressure. For example, the electronic control unit 22, 18 and 20 provides the respective pressure signal on the basis of the respective received first sensor signal.

In the embodiment shown in Fig. 1, the respective vehicle 12, 14 and 16 further comprises a respective static pressure sensor 34, 36 and 38 by means of which a respective static pressure acting on the respective vehicle 12, 14 and 16 is measured. This means that the respective total pressure sensor 28, 30 and 32 measures the respective total pressure acting on the respective vehicle 12, 14 and 16, and the respective static pressure sensor 34, 36 and 38 measures the respective static pressure acting on the respective vehicle 12, 14 and 16. The respective sensors 28 and 34, 30 and 36, 32 and 38 are separate components which are arranged at different locations which are spaced apart from each other.

The respective static pressure sensor 34, 36 and 38 provides a respective second sensor signal indicative of the respective measured static pressure. The respective electronic control unit 22, 18 and 20 receives the respective second sensor signal. For example, the electronic control unit 22, 18 and 20 provides the respective pressure signal on the basis of the respective received second sensor signal.

Moreover, for example, the first pressure, the second pressure and/or the third pressure is a dynamic pressure. Therein, the respective dynamic pressure is determined by means of the respective electronic control unit 22, 18 and 20 on the basis of a difference between the respective measured total pressure and the respective measured static pressure. This means the electronic control unit 22 determines the dynamic pressure acting on the vehicle 12 by determining a difference between the total pressure measured by the sensor 28 and the static pressure measured by the sensor 34. Therein, the electronic control unit 22 determines the difference between the total and static pressures acting on the vehicle 12 on the basis of the sensor signals provided by the sensors 28 and 34.

Moreover, the dynamic pressure acting on the vehicle 14 is determined by means of the electronic control unit 18 on the basis of a difference between the total pressure measured by the sensor 30 and the static pressure measured by the sensor 36. Thus, the difference between the total pressure measured by the pressure sensor 30 and the statistic pressure measured by the sensor 36 is determined by the electronic control unit 18 on the basis of the sensor signals provided by the sensors 30 and 36.

Moreover, the dynamic pressure acting on the vehicle 16 is determined by the electronic control unit 20 on the basis of a difference between the total pressure measured by the sensor 32 and the static pressure measured by the sensor 38. Therein, the difference between the total and static pressures acting on the vehicle 16 are determined by the electronic control unit 20 on the basis of the sensor signals provided by the sensors 32 and 38.

Since the vehicle 12, in particular the electronic control unit 22, determines the first pressure, i.e. the first dynamic pressure acting on the vehicle 12, since the vehicle 12, in particular the electronic control unit 22, receives the second signal being indicative of the second pressure, i.e. the second dynamic pressure acting on the vehicle 12, and since the vehicle 12, in particular the electronic control unit 22, receives the fourth signal being indicative of the third pressure, i.e. the third dynamic pressure acting on the vehicle 16, the electronic control unit 22 determines a difference between the first and second pressures and a difference between the first and third pressures. On the basis of the difference between the first and second pressures the electronic control unit 22 determines at least one first benefit value, and on the basis of the difference between the first and third pressures the electronic control unit 22 determines at least one second benefit value.

Since the electronic control unit 18 determines the second pressure, i.e. the second dynamic pressure acting on the vehicle 14, and since the electronic control unit 18 receives the first signal being indicative of the first pressure, i.e. the first dynamic pressure acting on the vehicle 12, the electronic control unit 18 determines the difference between the first and second pressures. Moreover, the electronic control unit 18 determines the first benefit value.

Furthermore, since the electronic control unit 20 receives the third signal being indicative of the first pressure, i.e. of the first dynamic pressure acting on the vehicle 12, and since the electronic control unit 20 determines the third pressure, i.e. the third dynamic pressure acting on the vehicle 16, the electronic control unit 20 determines the difference between the first and third pressures. Moreover, the electronic control unit 20 determines the second benefit value.

The first benefit value characterizes a first beneficial effect of the platoon 10 on the vehicle 14. The beneficial effect of the platoon 10 on the vehicle 14 is that the second pressure is lower than the first pressure since the vehicle 14 drives in the platoon 10 instead of alone. As can be seen from Fig. 1, the beneficial effect for the vehicle 14 is offered to the vehicle 14 by the leading vehicle.

The second benefit value characterizes a beneficial effect of the platoon 10 on the vehicle 16. The beneficial effect of the platoon 10 on the vehicle 16 is that the third pressure is lower than the first pressure since the vehicle 16 drives in the platoon 10 instead of alone. Thus, the beneficial effect of the platoon 10 on the vehicle 16 is offered to the vehicle 16 by the leading vehicle. Since the leading vehicle 12, i.e. the electronic control unit 22 determines both the first and second benefit values, the leading vehicle 12 determines the beneficial effects offered by the vehicle 12 to the vehicles 14 and 16. Since the vehicles 12, 14 and 16 share data, i.e. the signals on the basis of which the benefit values can be determined by the vehicles 12, 14 and 16, i.e. by the electronic control unit 18, 20 and 22, the determined benefit values can be compared and optionally corrected.

Preferably, the benefit values are provided by the at least one of the electronic control units 18, 20 and 22 such that the benefit values are transferred to a further processing unit 40 which is an additional and further component with respect to the vehicles 12, 14 and 16. The processing unit 40 receives the benefit values and determines, on the basis of the benefit values, a reward for the beneficial effects. Thus, for example, the vehicle 12 or its driver or its operator can be awarded for offering the beneficial effects to the following vehicles.

The respective total pressure sensor 28, 30 and 32 is, for example, arranged at a first side of the respective vehicle 12, 14 and 16, in particular in an area on a cooler grill-mask. Alternatively or additionally, the respective static pressure sensor 34, 36 and 38 is, for example, arranged on a backside of the respective vehicle 12, 14 and 16.

The respective electronic control unit 18, 20 and 22 can collect data in the form of the sensor signals provided by the respective sensors 28 and 34, 30 and 36 and 32 and 38. Data indicative of the respective determined pressures can be shared among the vehicles 12, 14 and 16 via the vehicle-to-vehicle-communications 24 and 26 so that the vehicles 12, 14 and 16 can each determine, in particular calculate, the benefit values.

Preferably, the respective electronic control unit 18, 20 and 22 performs an integration over time by means of which the respective difference is integrated on a time basis thereby determining the respective benefit value. Thus, the benefit value characterizes the respective beneficial effect the respective following vehicle receives while driving in the platoon 10.

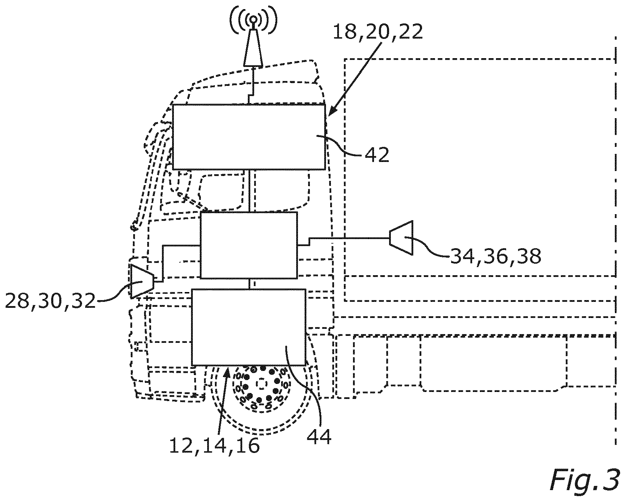

As can be seen from Fig. 3, the respective electronic control unit 18, 20 and 22 can comprise a communication module 42 by means of which the wireless communications 24 and 26 can be established. Moreover, the electronic control unit 18, 20 and 22 can comprise a platooning control module 44 by means of which the respective vehicle 12, 14 and 16 can be operated, in particular automatically, such that the vehicle 12, 14 and 16 is, in particular automatically, driven in the platoon 10. Moreover, the respective electronic control unit 18, 20 and 22 can comprise an acquisition module configured to acquire data relating to a state of the platoon 10, and/or to a current role of the respective vehicle 12, 14 and 16 in the platoon 10, and/or to a gap or distance between the respective vehicle 12, 14 and 16 and the respective vehicle driving in front of the respective vehicle 12, 14 and 16 and/or whether or not a vehicle is driving in front and/or behind the respective vehicle 12, 14 and 16.

Moreover, the respective total pressure sensor 28, 30 or 32 can be seen from Fig. 3. Moreover, Fig. 3 shows the respective static pressure sensor 34, 36 and 38. In Fig. 2 an arrow 46 illustrates that the first signal and, thus, the first pressure, in particular the first dynamic pressure, acting on the vehicle 12 is transferred from the vehicle 12, in particular from the electronic control unit 22, to the vehicle 14, in particular the electronic control unit 18 and received by the vehicle 14, in particular by the electronic control unit 18. In this regard, an arrow 48 illustrates that the third signal and, thus, the first pressure acting on the vehicle 12 is transferred from the vehicle 12, in particular from the electronic control unit 22, to the vehicle 16, in particular to the electronic control unit 20, and received by the vehicle 16, in particular by the electronic control unit 20. If, for example, the first pressure is said total pressure acting on the vehicle 12, the first pressure is measured by the sensor 28 so that, for example, the first and third signals characterize the total pressure acting on the vehicle 12. However, in the embodiment shown in the figures, the first pressure is said first dynamic pressure acting on the vehicle 12 while driving in the platoon 10, wherein the first dynamic pressure is determined by means of the electronic control unit 22 on basis of the sensor signals provided by the sensors 28 and 34, i.e. on the basis of the measured total pressure and the measured static pressure. The respective electronic control unit 18 and 20 determine said difference between the first pressure and the second pressure or the first pressure and the third pressure respectively.

Moreover, in Fig. 2, an arrow 50 illustrates that the second signal, and, thus, the second pressure is transferred from the vehicle 14, in particular from the electronic control unit 18, to the vehicle 12, in particular the electronic control unit 22, and received by the vehicle 12, in particular by the electronic control unit 22. Moreover, an arrow 52 illustrates that the fourth signal and, thus, the third pressure are transferred from the vehicle 16, in particular from the electronic control unit 20, to the vehicle 12, in particular to the electronic control unit 22, and received by the vehicle 12, in particular by the electronic control unit 22.

Since the sensors 28 and 34 provide said sensor signals indicative of the measured pressures, and since the electronic control unit 22 receives the sensor signals provided by the sensors 28 and 34, the sensor signals provided by the sensors 28 and 34 are provided by the vehicle 12. Since said sensor signals are provided by the sensors 30 and 36 and since the sensor signals provided by the sensors 30 and 36 are received by the electronic control unit 18, the sensor signals provided by the sensors 30 and 36 are provided by the vehicle 14. Since said sensor signals are provided by the sensors 32 and 38, and since the electronic control unit 20 receives the sensor signals provided by the sensor 32 and 38, the sensor signals provided by the sensors 32 and 38 are provided by the vehicle 16.

If, for example, the second pressure and/or the third pressure is said respective total pressure, the second or third pressure is measured by the total pressure sensor 30 or 32 so that the second signal and the fourth signal characterize the respective total pressures. However, in the embodiment shown in the figures, the second pressure is said dynamic pressure acting on the vehicle 14 while driving the platoon 10, and the third pressure is said dynamic pressure acting on the vehicle 16 while driving in the platoon 10. The second dynamic pressure is determined by the electronic control unit 18 on the basis of a difference between the total and static pressures measured by the sensors 30 and 36 and acting on the vehicle 14 so that the second signal characterizes the determined second dynamic pressure. The third pressure is, in the embodiments shown in the figures, said third dynamic pressure acting on the vehicle 16 while driving in the platoon 10. The third dynamic pressure is determined by the electronic control unit 20 on the basis of a difference of the total and static pressures measured by the sensors 32 and 38. Thus, the fourth signal characterizes the determined third dynamic pressure determined by the electronic control unit 10.

As can be seen from the figures, the vehicles 12, 14 and 16 share data via the vehicle-to-vehicle-communication 24 and 26 so that each vehicle 12, 14 and 16 can determine the respective benefit value and, thus the respective beneficial effect offered and/or received. Thus, the respective vehicle or driver operator of the respective vehicle offering a beneficial effect while platooning can be rewarded.

### List of Reference Signs

- 10: platoon
- 12: leading vehicle
- 14: following vehicle
- 16: following vehicle
- 18: electronic control unit
- 20: electronic control unit
- 22: electronic control unit
- 24: vehicle-to-vehicle-communication
- 26: vehicle-to-vehicle-communication
- 28: first pressure sensor
- 30: second pressure sensor
- 32: pressure sensor
- 34: static pressure sensor
- 36: static pressure sensor
- 38: static pressure sensor
- 40: processing unit
- 42: communication module
- 44: control module
- 46: arrow
- 48: arrow
- 50: arrow
- 52: arrow

## Claims

1. A method for determining a beneficial effect of a platoon (10) comprising a leading vehicle (12) and at least one following vehicle (14) following the leading vehicle (12), the method comprising:
- determining, by means of an electronic processing unit (18, 22), at least one second pressure acting on the following vehicle (14); the method being
**characterised by** further comprising:
- determining, by means of the electronic processing unit (18, 22), at least one first pressure acting on the leading vehicle (12);
- determining, by means of the electronic processing unit (18, 22), a difference between the first and second pressures; and
- determining, by means of the electronic processing unit (18, 22), at least one benefit value on the basis of the difference, the benefit value characterizing the beneficial effect of the platoon (10) on at least one of the vehicles (12, 14).

2. The method according to claim 1,
wherein:
- the electronic processing unit (18, 22) receives at least one first pressure signal provided by the leading vehicle (12), the first pressure signal being indicative of the first pressure measured by a first pressure sensor (28) of the leading vehicle (12); and
- the electronic processing unit (18, 22) determines the first pressure on the basis of the first pressure signal.

3. The method according to claim 2,
wherein:
- the electronic processing unit (18, 22) receives at least one second pressure signal provided by the following vehicle (14), the second pressure signal being indicative of the second pressure measured by a second pressure sensor (30) of the following vehicle (14); and
- the electronic processing unit (18, 22) determines the second pressure on the basis of the second pressure signal.

4. The method according to claim 2 or 3,
wherein the first and second pressures are respective total pressures.

5. The method according to claim 1,
wherein:
- the electronic processing unit (18, 22) receives at least one first pressure signal provided by the leading vehicle (12), the first pressure signal being indicative of the first pressure being a first dynamic pressure; and
- the electronic processing unit (18, 22) determines the first pressure on the basis of the first pressure signal.

6. The method according to claim 5,
wherein:
- the electronic processing unit (18, 22) receives at least one second pressure signal provided by the following vehicle (14), the second pressure signal being indicative of the second pressure being a second dynamic pressure; and
- the electronic processing unit (18, 22) determines the second pressure on the basis of the second pressure signal.

7. The method according to claim 5,
wherein:
- at least one total pressure acting on the following vehicle (14) is measured by means of at least one total pressure sensor (30) of the following vehicle (14);
- at least one static pressure acting on the following vehicle (14) is measured by means of at least one static pressure sensor (36) of the following vehicle (14);
- the second pressure is determined, by means of the electronic processing unit (18, 22), on the basis of a difference between the measured total pressure and the measured static pressure.

8. The method according to claim 1,
wherein:
- the electronic processing unit (18, 22) receives at least one first pressure signal provided by the following vehicle (14), the first pressure signal being indicative of the second pressure being a first dynamic pressure; and
- the electronic processing unit (18, 22) determines the second pressure on the basis of the first pressure signal.

9. The method according to claim 8,
wherein:
- at least one total pressure acting on the leading vehicle (12) is measured by means of at least one total pressure sensor (28) of the leading vehicle (12);
- at least one static pressure acting on the leading vehicle (12) is measured by means of at least one static pressure sensor (34) of the leading vehicle (12);
- the first pressure is determined, by means of the electronic processing unit (18, 22), on the basis of a difference between the measured total pressure and the measured static pressure.

10. The method according to any one of claims 2 to 9, wherein the pressure signal is received via a direct vehicle-to-vehicle-communication (24) between the leading vehicle (12) and the following vehicle (14).

11. The method according to anyone of the preceding claims, wherein the electronic processing (18, 22) unit is a component of the following vehicle (14).

12. The method according to anyone of the preceding claims, wherein the benefit value is determined by integrating the difference on a time basis.

13. The method according to anyone of the preceding claims, wherein the benefit value is transferred from the electronic processing unit (18, 22) to a further processing unit (40) for determining, on the basis of the benefit value, a reward for the beneficial effect of the platoon (10).

## Patentansprüche

1. Verfahren zum Bestimmen eines Nutzeffekts einer Kolonne (10), die ein führendes Fahrzeug (12) und mindestens ein nachfolgendes Fahrzeug (14) umfasst, das dem führenden Fahrzeug (12) folgt, wobei das Verfahren umfasst:
- Bestimmen mindestens eines zweiten Drucks, der auf das nachfolgende Fahrzeug (14) wirkt, mit Hilfe einer elektronischen Verarbeitungseinheit (18, 22);
wobei das Verfahren **dadurch gekennzeichnet ist, dass** es ferner umfasst:
- Bestimmen mindestens eines ersten Drucks, der auf das führende Fahrzeug (12) wirkt, mit Hilfe einer elektronischen Verarbeitungseinheit (18, 22);
- Bestimmen einer Differenz zwischen dem ersten und dem zweiten Druck mit Hilfe der elektronischen Verarbeitungseinheit (18, 22); und
- Bestimmen mindestens eines Nutzwertes mit Hilfe der elektronischen Verarbeitungseinheit (18, 22) auf der Basis der Differenz, wobei der Nutzwert die Nutzwirkung der Kolonne (10) auf mindestens eines der Fahrzeuge (12, 14) charakterisiert.

2. Verfahren nach Anspruch 1, wobei:
- die elektronische Verarbeitungseinheit (18, 22) mindestens ein erstes Drucksignal empfängt, das von dem führenden Fahrzeug (12) bereitgestellt wird, wobei das erste Drucksignal kennzeichnend für den ersten Druck ist, der von einem ersten Drucksensor (28) des führenden Fahrzeugs (12) gemessen wird; und
- die elektronische Verarbeitungseinheit (18, 22) den ersten Druck auf der Grundlage des ersten Drucksignals bestimmt.

3. Verfahren nach Anspruch 2,
wobei:
- die elektronische Verarbeitungseinheit (18, 22) mindestens ein zweites Drucksignal empfängt, das von dem nachfolgende Fahrzeug (14) bereitgestellt wird, wobei das zweite Drucksignal kennzeichnend für den zweiten Druck ist, der von einem zweiten Drucksensor (30) des nachfolgende Fahrzeugs (14) gemessen wird; und
- die elektronische Verarbeitungseinheit (18, 22) den zweiten Druck auf der Grundlage des zweiten Drucksignals bestimmt.

4. Verfahrens nach Anspruch 2 oder 3,
wobei der erste und der zweite Druck jeweilige Gesamtdrücke sind.

5. Verfahren nach Anspruch 1,
wobei:
- die elektronische Verarbeitungseinheit (18, 22) mindestens ein erstes Drucksignal empfängt, das von dem führenden Fahrzeug (12) bereitgestellt wird, wobei das erste Drucksignal kennzeichnend dafür ist, dass der erste Druck ein erster dynamischer Druck ist; und
- die elektronische Verarbeitungseinheit (18, 22) den ersten Druck auf der Grundlage des ersten Drucksignals bestimmt.

6. Verfahren nach Anspruch 5,
wobei:
- die elektronische Verarbeitungseinheit (18, 22) mindestens ein zweites Drucksignal empfängt, das von dem nachfolgenden Fahrzeug (14) bereitgestellt wird, wobei das zweite Drucksignal kennzeichnend dafür ist, dass der zweite Druck ein zweiter dynamischer Druck ist; und
- die elektronische Verarbeitungseinheit (18, 22) den zweiten Druck auf der Grundlage des zweiten Drucksignals bestimmt.

7. Verfahren nach Anspruch 5,
wobei:
- mindestens ein auf das nachfolgende Fahrzeug (14) wirkender Gesamtdruck mit Hilfe von mindestens einem Gesamtdrucksensor (30) des nachfolgenden Fahrzeugs (14) gemessen wird;
- mindestens ein auf das nachfolgende Fahrzeug (14) wirkender statischer Druck mit Hilfe von mindestens einem statischen Drucksensor (36) des nachfolgenden Fahrzeugs (14) gemessen wird;
- der zweite Druck mit Hilfe der elektronischen Verarbeitungseinheit (18, 22) auf der Grundlage einer Differenz zwischen dem gemessenen Gesamtdruck und dem gemessenen statischen Druck bestimmt wird.

8. Verfahren nach Anspruch 1,
wobei:
- die elektronische Verarbeitungseinheit (18, 22) mindestens ein erstes Drucksignal empfängt, das von dem nachfolgenden Fahrzeug (14) bereitgestellt wird, wobei das erste Drucksignal kennzeichnend dafür ist, dass der zweite Druck ein erster dynamischer Druck ist; und
- die elektronische Verarbeitungseinheit (18, 22) den zweiten Druck auf der Grundlage des ersten Drucksignals bestimmt.

9. Verfahren nach Anspruch 8,
wobei:
- mindestens ein auf das führende Fahrzeug (12) wirkender Gesamtdruck mit Hilfe von mindestens einem Gesamtdrucksensor (28) des führenden Fahrzeugs (12) gemessen wird;
- mindestens ein auf das führende Fahrzeug (12) wirkender statischer Druck mit Hilfe von mindestens einem statischen Drucksensor (34) des führenden Fahrzeugs (12) gemessen wird;
- der erste Druck mit Hilfe der elektronischen Verarbeitungseinheit (18, 22) auf der Grundlage einer Differenz zwischen dem gemessenen Gesamtdruck und dem gemessenen statischen Druck bestimmt wird.

10. Verfahren nach einem der Ansprüche 2 bis 9,
wobei das Drucksignal über eine direkte Fahrzeug-zu-Fahrzeug-Kommunikation (24) zwischen dem führenden Fahrzeug (12) und dem nachfolgenden Fahrzeug (14) empfangen wird.

11. Verfahren nach einem der vorhergehenden Ansprüche, wobei die
elektronische Verarbeitungseinheit (18, 22) eine Komponente des nachfolgenden Fahrzeugs (14) ist.

12. Verfahren nach einem der vorhergehenden Ansprüche, wobei der Nutzwert durch Integrieren der Differenz auf einer Zeitbasis bestimmt wird.

13. Verfahren nach einem der vorhergehenden Ansprüche,
wobei der Nutzwert von der elektronischen Verarbeitungseinheit (18, 22) an eine weitere Verarbeitungseinheit (40) zum Bestimmen einer Honorierung der Nutzwirkung der Kolonne (10) auf der Grundlage des Nutzwertes übertragen wird.

## Revendications

1. Procédé de détermination d'un effet bénéfique d'un peloton (10) comprenant un véhicule de tête (12) et au moins un véhicule suiveur (14) qui suit le véhicule de tête (12), le procédé comprenant :
la détermination, au moyen d'une unité de traitement électronique (18, 22), d'au moins une deuxième pression agissant sur le véhicule suiveur (14) ; le procédé étant **caractérisé en ce qu'**il comprend en outre :
la détermination, au moyen de l'unité de traitement électronique (18, 22),
d'au moins une première pression agissant sur le véhicule de tête (12) ;
la détermination, au moyen de l'unité de traitement électronique (18, 22),
d'une différence entre les première et deuxième pressions ; et
la détermination, au moyen de l'unité de traitement électronique (18, 22),
d'au moins une valeur de bénéfice sur la base de la différence, la valeur de bénéfice caractérisant l'effet bénéfique du peloton (10) sur au moins un des véhicules (12, 14).

2. Procédé selon la revendication 1,
l'unité de traitement électronique (18, 22) recevant au moins un premier signal de pression fourni par le véhicule de tête (12), le premier signal de pression indiquant la première pression mesurée par un premier capteur de pression (28) du véhicule de tête (12) ; et
l'unité de traitement électronique (18, 22) déterminant la première pression sur la base du premier signal de pression.

3. Procédé selon la revendication 2,
l'unité de traitement électronique (18, 22) recevant au moins un deuxième signal de pression fourni par le véhicule suiveur (14), le deuxième signal de pression indiquant la deuxième pression mesurée par un deuxième capteur de pression (30) du véhicule suiveur (14) ; et
l'unité de traitement électronique (18, 22) déterminant la deuxième pression sur la base du deuxième signal de pression.

4. Procédé selon la revendication 2 ou 3,
les première et deuxième pressions étant des pressions totales respectives.

5. Procédé selon la revendication 1,
l'unité de traitement électronique (18, 22) recevant au moins un premier signal de pression fourni par le véhicule de tête (12), le premier signal de pression indiquant que la première pression est une première pression dynamique ; et
l'unité de traitement électronique (18, 22) déterminant la première pression sur la base du premier signal de pression.

6. Procédé selon la revendication 5,
l'unité de traitement électronique (18, 22) recevant au moins un deuxième signal de pression fourni par le véhicule suiveur (14), le deuxième signal de pression indiquant que la deuxième pression est une deuxième pression dynamique ; et
l'unité de traitement électronique (18, 22) déterminant la deuxième pression sur la base du deuxième signal de pression.

7. Procédé selon la revendication 5,
au moins une pression totale agissant sur le véhicule suiveur (14) étant mesurée au moyen d'au moins un capteur de pression totale (30) du véhicule suiveur (14) ; au moins une pression statique agissant sur le véhicule suiveur (14) étant mesurée au moyen d'au moins un capteur de pression statique (36) du véhicule suiveur (14) ;
la deuxième pression étant déterminée, au moyen de l'unité de traitement électronique (18, 22), sur la base d'une différence entre la pression totale mesurée et la pression statique mesurée.

8. Procédé selon la revendication 1,
l'unité de traitement électronique (18, 22) recevant au moins un premier signal de pression fourni par le véhicule suiveur (14), le premier signal de pression indiquant que la deuxième pression est une première pression dynamique ; et
l'unité de traitement électronique (18, 22) déterminant la deuxième pression sur la base du premier signal de pression.

9. Procédé selon la revendication 8,
au moins une pression totale agissant sur le véhicule de tête (12) étant mesurée
au moyen d'au moins un capteur de pression totale (28) du véhicule de tête (12) ;
au moins une pression statique agissant sur le véhicule de tête (12) étant mesurée
au moyen d'au moins un capteur de pression statique (34) du véhicule de tête (12) ;
la première pression étant déterminée, au moyen de l'unité de traitement électronique (18, 22), sur la base d'une différence entre la pression totale mesurée et la pression statique mesurée.

10. Procédé selon l'une quelconque des revendications 2 à 9,
le signal de pression étant reçu via une communication véhicule-véhicule directe (24) entre le véhicule de tête (12) et le véhicule suiveur (14).

11. Procédé selon l'une quelconque des revendications précédentes, l'unité de traitement électronique (18, 22) étant un composant du véhicule suiveur (14).

12. Procédé selon l'une quelconque des revendications précédentes, la valeur de bénéfice étant déterminée en intégrant la différence par rapport au temps.

13. Procédé selon l'une quelconque des revendications précédentes, la valeur de bénéfice étant transférée de l'unité de traitement électronique (18, 22) à une autre unité de traitement (40) pour déterminer, sur la base de la valeur de bénéfice, une récompense pour l'effet bénéfique du peloton (10).
